# EUROPÄISCHE PATENTANMELDUNG

(11) **EP 1 752 033 A1**
(43) Veröffentlichungstag der Anmeldung: **14.02.2007**
(21) Anmeldenummer: 05017608.0
(22) Anmeldetag: 12.08.2005
(51) Int. Cl.: A01C 23/04

(54) **Vorrichtung zum Abführen bzw. zum Zuführen vorzugsweise flüssiger Medien**

(71) Anmelder: Josef Kotte Landtechnik GmbH & Co. KG, 49597 Rieste (DE)
(72) Erfinder: Siemer, Alfred, 26689 Godensholt (DE)
(74) Vertreter: Siekmann, Gunnar

(57) **Zusammenfassung**

Bei einer Vorrichtung zum Abführen bzw. zum Zuführen vorzugsweise flüssiger Medien, insbesondere Gülle, aus wenigstens einem bzw. in wenigstens einem Behälter, umfassend zumindestens einen Tank und umfassend wenigstens ein an den Tank angesetztes Abführorgan, weist das Abführorgan wenigstens zwei Teilabschnitte auf. Die Teilabschnitte sind in parallel zueinander ausgerichteten, etwa senkrecht verlaufenden Ebenen angeordnet sind und jedem Teilabschnitt ist wenigstens ein Antriebsmittel zugeordnet.

## Beschreibung

Die Erfindung bezieht sich auf eine Vorrichtung zum Abführen bzw. zum Zuführen vorzugsweise flüssiger Medien, insbesondere Gülle, aus wenigstens einem bzw. in wenigstens einem Behälter, umfassend zumindestens einen Tank und umfassend wenigstens ein an den Tank angesetztes Abführorgan,

Es sind Absaugvorrichtungen bekannt, welche beispielsweise zum Entleeren von Güllesammelbehältern landwirtschaftlicher Betriebe eingesetzt werden. Zu diesem Zweck ist insbesondere an einem Tank eines Güllewagens ein Abführorgan angeordnet, welches z.B. an der Oberseite der Umfangsfläche des Tanks angelenkt und eine flüssigkeitsleitende Verbindung mit dem Innenraum des Tanks aufweist. Zum Abführen der Gülle aus dem Güllesammelbehälter wird das Abführorgan aus einer Transportstellung, wobei sich das Abführorgan längs zur Achse des Tanks erstreckt, bewegt und in den zu entleerenden Güllesammelbehälter eingebracht, um die darin befindliche Gülle aufgrund eines im Tank erzeugten Unterdrucks in den Tank des Güllewagens einzuleiten.

Bei Vorrichtungen der eingangs genannten Gattung entstehen aufgrund der bestehenden konstruktiven Ausgestaltung des Abführorgans Schwierigkeiten beim Absaugen und Abführen der Gülle aus Behältern unterschiedlicher Bauweise. Es ist nicht möglich, mit einer einzigen eingangs beschriebenen Absaugvorrichtung das vorzugsweise flüssige Medium aus einem Hochbehälter, dessen Behälterboden annähernd dasselbe Höhenniveau wie der umliegende Untergrund hat, und einem tief ins Erdreich eingelassenen Behälter, einer sogenannten Güllegrube, abzuführen. Insbesondere beim ins Erdreich eingelassenen Behälter reicht das Abführorgan nicht bis auf den Behälterboden. Es ist gegebenenfalls möglich, das Abführorgan mit einem separaten Gülleschlauch zu verlängern, so daß die Gülle vollständig abgeführt werden kann. Jedoch stellen die sich stetig vergrößernden Querschnitte der Gülleschläuche, um ein beschleunigtes Absaugen der Gülle zu ermöglichen, ein Problem beim Anschließen derselbigen an das Abführorgan dar. Durch die größer werdenden Querschnitte steigt gleichzeitig das Gewicht der Schläuche und somit der benötigte Kraftaufwand, um die Gülleschläuche mit dem Abführorgan zu verbinden. Des weiteren verursachen die vorab durchzuführenden Rüstarbeiten erhebliche Verzögerungen, die den Zeitaufwand des Gesamtvorgangs unnötig verlängern und somit einen erhöhten Kostenaufwand bedeuten.

Der Erfindung liegt die Aufgabe zugrunde, eine Vorrichtung der vorbeschriebenen Gattung so zu verbessern, daß zum Entleeren eines jeweiligen Behälters der Anschluß eines zusätzlichen Gülleschlauches nicht notwendig ist, und somit der Vorgang des Absaugens in verkürzter Zeit durchgeführt werden kann.

Die Lösung dieser Aufgabe erfolgt erfindungsgemäß durch die Merkmale des Patentanspruchs 1. Vorteilhafte Weiterbildungen und Ausgestaltungen der Erfindung sind in den Unteransprüchen angegeben.

Bei einer Vorrichtung der eingangs genannten Gattung ist erfindungsgemäß vorgesehen, daß das Abführorgan wenigstens zwei Teilabschnitte aufweist, die in parallel zu einander ausgerichteten, etwa senkrecht verlaufenden Ebenen angeordnet sind, und daß jedem Teilabschnitt wenigstens ein Antriebsmittel zugeordnet ist.

Die Anordnung der Teilabschnitte des Abführorgans in unterschiedlichen Ebenen ermöglicht eine individuelle Einstellbarkeit jedes einzelnen Teilabschnittes des Abführorgans, da diese sich in ihren möglichen Bewegungsrichtungen nicht kreuzen und somit eine gegenseitige Behinderung bei der Bewegung der einzelnen Teilabschnitte ausgeschlossen ist.

Mit dem ersten Teilabschnitt kann das Abführorgan auf vorteilhafte Weise z.B. sehr weit nach unten bewegt werden, wodurch ein zweiter Teilabschnitt bis auf den Boden eines Behälters, einer etwa 3 Meter tiefen Güllegrube, reichen kann. Auf der anderen Seite ist es auch möglich, mit dem ersten Teilabschnitt eine etwa 4 Meter hohe Wandung eines Hochbehälters zu überwinden. Der zweite Teilabschnitt wird durch den ersten Teilabschnitt über die Wandung hinweg geführt, anschließend kann der zweite Teilabschnitt in den Innenraum des Hochbehälters abgesenkt werden und ermöglicht eine Absaugtiefe von 5 Metern. Beide Teilabschnitte können dabei unabhängig voneinander bewegt werden, da sie erfindungsgemäß jeweils mit einem Antriebsmittel ausgerüstet sind. Somit können über die erfindungsgemäße Vorrichtung sowohl Hochbehälter als auch Behälter, die ins Erdreich eingelassen sind, effektiv entleert werden. Der Anschluß eines separaten Gülleschlauches wird vermieden, weshalb der Querschnitt des Abführorgans mit Vorteil sehr groß, bevorzugt 10 Zoll, ausgebildet werden kann. Die größeren Querschnitte der einzelnen Teilabschnitte, welche jeweils mit Hilfe von Antriebsmitteln bewegt werden, ermöglichen ein beschleunigtes Absaugen des flüssigen Mediums aus einem jeweiligen Behälter. Somit ist neben einer vereinfachten Handhabung ein verkürzter Vorgang des Absaugens gegeben und eine erhöhte Wirtschaftlichkeit umgesetzt.

Mit besonderem Vorteil ist nach einer Weiterbildung der Erfindung vorgesehen, daß die Teilabschnitte des Abführorgans einer der Stirnseiten des Tanks zugeordnet sind und daß die Teilabschnitte in ihrer Transportstellung vorbestimmte Baulängen aufweisen, welche an die Fahrzeugabmessungen des Güllewagens maximal angepaßt sind. Die Teilabschnitte des Abführorgans lassen sich beispielsweise im Heckbereich bzw. zwischen dem Fahrerhaus und dem Tank des Güllewagens an einer Stirnseite des Tanks anordnen. Dabei ragen die einzelnen Teilabschnitte in ihrer Transportstellung nicht über die maximal zulässigen Abmaße des Fahrzeugs hinaus, wodurch der Einsatz im öffentlichen Straßenverkehr gewährleistet ist. Gleichzeitig werden die Fahrzeugabmessungen des Güllewagens derart ausgenutzt, daß sich mit Vorteil maximale Baulängen für die Teilabschnitte des Abführorgans ergeben. Somit ist stets sichergestellt, daß das Abführorgan bis auf den Boden eines jeweiligen Behälters reicht und das Anschließen eines separaten Gülleschlauches nicht erforderlich ist, wodurch sich eine vereinfachte und gleichzeitig verbesserte Handhabung beim Einsatz der erfindungsgemäßen Vorrichtung ergibt.

Um eine Relativbewegung der einzelnen Teilabschnitte zueinander vornehmen zu können, sind die Teilabschnitte über eine Drehführung schwenkbeweglich miteinander verbunden. Die Drehführung dient insbesondere zur Führung und zur Kraftaufnahme der an den jeweiligen Teilabschnitte angreifenden und durch die Teilabschnitte erzeugten Kräfte. Die Drehführung setzt vorzugsweise auf einfache Art und Weise eine optimale Möglichkeit um, eine spielfreie Verbindung zwischen den beiden Teilabschnitten des Abführorgans herzustellen und gleichzeitig eine leckagefreien Übergang zwischen dem ersten und dem zweiten Teilabschnitt des Abführorgans zu gewährleisten. Mit Hilfe der Drehführung kann ein optimales Verschwenken der beiden Teilabschnitte gegeneinander erfolgen, wobei zwischen den Teilabschnitten, in Abhängigkeit von den eingesetzten Antriebsmitteln, ein beliebiger Winkel eingestellt werden kann.

Ein erster Teilabschnitt des Abführorgans ist ein am Tank angelenktes gekröpftes Rohrstück. Das Rohrstück, welches bevorzugt aus einem biegesteifen Material ausgebildet ist, weist etwa die Abmaße der Fahrzeugbreite auf. Der Teilabschnitt kann insbesondere bis zu einem Winkel von etwa 240° um ein Anschlußstück am Tank des Güllewagens verschwenkt werden. Durch den großen Schwenkbereich ist bereits mit dem ersten Teilabschnitt eine optimale Anpassung des Abführorgans auf die unterschiedlichen Höhen der verschiedenen Behälter möglich.

Um nach dem Absaugen der Gülle aus einem jeweiligen Behälter, die noch im Abführorgan befindliche Gülle entfernen zu können, weist der erste Teilabschnitt ein Belüftungsorgan auf. Das Belüftungsorgan ist bevorzugt im abgekröpften Bereich des ersten Teilabschnittes angeordnet, so daß nach dem Öffnen des Belüftungsorgans die Gülle entgegen der normalen Fließrichtung aus dem Abführorgan zurück in den Behälter fließen kann. Somit ist gewährleistet, daß nach dem Herausschwenken des Abführorgans aus dem Güllesammelbehälter keine größeren Verunreinigungen durch die herauslaufende Gülle entsteht und somit insbesondere um den Bereich eines jeweiligen Behälters eine stärkere Verschmutzung vermieden wird.

Nach einer Weiterbildung der Erfindung ist vorgesehen, daß das Belüftungsorgan ein elektrisch angesteuertes Ventil ist. Das Ventil kann beispielsweise mit Hilfe einer Steuerelektronik des Güllewagens in Abhängigkeit von bestimmten Auslösekriterien betätigt werden. Das Signal zum Öffnen des Belüftungsorgans kann durch das Ende des Absaugvorganges, welcher zum einen aufgrund eines vollen Tanks des Güllewagens oder zum anderen in Folge eines entleerten Behälters unterbrochen wird, ausgelöst werden. Der Einsatz eines elektrisch angesteuerten Ventils hat den Vorteil, daß die Stellung des Ventils mit Hilfe der Steuerelektronik sowohl überwacht als auch geregelt werden kann, so daß nach einem erfolgten Absaugvorgang automatisch das Abführorgan entleert wird und eine unnötige Verschmutzung beim Herausnehmen des Abführorgans aus dem einem jeweiligen Behälter ausgeschlossen ist.

Um ein gezieltes Entleeren des Abführorgans nach einem erfolgten Absaugvorgang vornehmen zu können, ist an dem Belüftungsorgan ein Druckbehälter medienleitend angeschlossen. Mit Hilfe des an dem Belüftungsorgan angeschlossenen Druckbehälters, kann eine sogenannte aktive Belüftung des Abführorgans vorgenommen werden, so daß das Entleeren mit Vorteil in kürzerer Zeit und mit größerer Effektivität durchgeführt werden kann. Der Druckbehälter ist ein Druckluftreservoir und beinhaltet eine vorbestimmte Menge an komprimierter Luft. Im Druckbehälter liegt bevorzugt ein Druck von 10 bar an, der nach Unterschreiten eines vorbestimmten Druckes innerhalb des Druckbehälters automatisch über einen am Fahrzeug mitgeführten Kompressor wieder hergestellt werden kann. Es ist ebenfalls denkbar, daß der Druck innerhalb des Druckbehälters über einen Sensor, der eine elektrische Verbindung zur Steuerelektronik des Güllewagens aufweist, aufgenommen wird. Die Steuerelektronik übermittelt, insbesondere nach Unterschreiten eines vorbestimmten Mindestdruckes innerhalb des Druckbehälters, einen Hinweis an den Fahrer des Güllewagens, so daß dieser bei nächst möglicher Gelegenheit den Druckbehälter wiederum mit dem bevorzugten Druckniveau beaufschlagen kann.

Um ein vollständiges Abführen des flüssigen Mediums aus einem jeweiligen Behälter zu gewährleisten, ist ein zweiter Teilabschnitt ein gestrecktes Rohrstück, das sich etwa über eine senkrecht zur Fahrzeuglängsachse ausgerichtete Fahrzeugdiagonale erstreckt. Durch das nahezu geradlinig ausgebildete Rohrstück ist ein Teilabschnitt des Abführorgans vorbestimmter Baulänge ausgebildet, der jeweils bis auf den Boden der verschiedenen Behälter eingebracht werden kann, um mit Vorteil den gesamten Inhalt aus den jeweiligen Behältern zu entfernen. Der zweite Teilabschnitt ist vorzugsweise aus einem verwindungssteifen Material gefertigt, wodurch die geradlinige Ausgestaltung ermöglicht wird. Es ist ebenfalls möglich, den zweiten Teilabschnitt des Abführorgans aus einem flexiblen Material auszubilden, wobei der schlauchähnliche Teilabschnitt auf einer Trommel aufgewickelt sein kann.

Um die vollständige Entleerung von Behältern spezieller Tiefe vornehmen zu können, ist der zweite Teilabschnitt des Abführorgans mehrteilig ausgebildet. Dabei weist der zweite Teilabschnitt einen teleskopierbaren Bereich auf, der über eine daran angeordnete Geradführung längenverschieblich geführt wird. Um die Länge des zweiten Teilabschnittes einstellen zu können, wird vorzugsweise ein Antriebsmittel, in Form eines hydraulisch bzw. pneumatisch betätigten Zylinders, eingesetzt. Der Zylinder kann über eine ein Arbeitsmedium leitende Schlauchleitung angesteuert werden, die gegebenenfalls vom fahrzeugseitigen System mittels geeigneter Steckverbindungen getrennt werden kann. Der Einsatz eines mehrteiligen, zweiten Teilabschnittes ermöglicht eine Teleskopierbarkeit dieses Teilabschnittes, wodurch auf vorteilhafte Weise Güllegruben mit einer Tiefe von etwa 5 Metern optimal entleert werden können.

Um das Absaugen bzw. das Entleeren der jeweiligen Behälter mit einem am Behälter stationär angeordneten Saugrohr durchführen zu können, weist der zweite Teilabschnitt in einem vorbestimmten Bereich ein Kupplungsorgan auf. Dazu weist insbesondere das obere Drittel des zweiten Teilabschnittes ein als Schnellverschluß, ähnlich einem Bajonettverschluss, ausgebildetes Kupplungsorgan auf, so daß ein vorbestimmter Teil jedoch mehr als ¾ der Gesamtlänge des zweiten Teilabschnittes abgenommen werden kann und durch geeignete Aufsätze austauschbar ist. Diese geeigneten Aufsätze, welche beispielsweise eine verkürzte Baulänge wie auch die Form eines Trichters aufweisen können, werden auf einen Absaugstutzen eines fest an einem jeweiligen Behälter vormontierten Steigrohres aufgeschoben und bilden mit dem Absaugstutzen einen selbstabdichtenden Anschluß aus. Durch den vorhandenen Unterdruck im Abführorgan wird stets die selbstabdichtende Wirkung am Übergang zwischen dem Absaugstutzen und dem Aufsatz gewährleistet, so daß das abzuführende flüssige Medium leckagefrei in den Tank des Güllewagens eingeführt werden kann. Der Einsatz eines Kupplungsorgans am zweiten Teilabschnitts des Abführorgans hat somit den Vorteil, daß unterschiedlich ausgestaltete Behälter nach einer geringfügigen Modifikation der erfindungsgemäßen Vorrichtung wirkungsvoll entleert werden können.

Um stets eine optimale Befüllung des Tanks des Güllewagens vornehmen zu können, ist im Querschnitt am freien Ende des zweiten Teilabschnittes zumindest eine Befüllhilfe angeordnet. Aufgrund des im Inneren des Tanks des Güllewagens vorherrschenden Unterdrucks, kann es zur Schaumbildung des aufgenommenen Mediums kommen, so daß ein im Inneren des Tanks angeordneter Sensor zur Messung des Füllstandes durch das sich vergrößernde Volumen des aufgenommenen Mediums den Absaugvorgang vorzeitig beendet. Gleicht sich der Druck im Inneren des Tanks aus, so fällt das Medium in sich zusammen, wobei gegebenenfalls der Tank nur zu zwei Drittel seines eigentlichen Volumens befüllt ist. Zu diesem Zweck wird eine Befüllhilfe am Einlaß des zweiten Teilabschnittes des Abführorgans angeordnet, die das flüssige Medium im jeweiligen Behälter beschleunigt durch das Abführorgan transportiert und gleichzeitig den Minderdruck innerhalb des Tanks des Güllewagens reduzieren kann. Durch den Einsatz einer Befüllhilfe kann mit Vorteil eine verbesserte Befüllung des Güllewagens erfolgen, wodurch gleichzeitig eine vollständige Befüllung des Tanks mit dem abzuführenden Medium gewährleistet ist.

Jede Befüllhilfe ist eine Pumpe, welche in der Ansaugöffnung des Abführorgans angeordnet ist und innerhalb des Abführorgans die Abführgeschwindigkeit des flüssigen Mediums erhöhen soll. Vorzugsweise wird eine hydraulisch betätigte Strömungsmaschine eingesetzt, wie z.B. eine über einen Hydromotor betriebene Kreiselpumpe, wobei der Hydromotor über das fahrzeugseitige Hydrauliksystem betrieben werden kann. Der Einsatz einer Strömungsmaschine zur Förderung des flüssigen Mediums im Abführorgan der erfindungsgemäßen Vorrichtung, ermöglicht auf vorteilhafte Weise die Umsetzung einer kontinuierlichen Strömung des Mediums innerhalb des Abführorgans, die über eine leicht umzusetzende Drehbewegung der Strömungsmaschine erzeugt werden kann.

Nach einer Weiterbildung der Erfindung ist vorgesehen, daß wenigstens eines der Antriebsmittel über ein Gestänge am ersten Teilabschnitt des Abführorgans angelenkt ist. Mit Hilfe des Gestänges kann insbesondere das vorhandene Verhältnis zwischen angreifender Kraft und einem zurückzulegenden Arbeitsweg verändert werden. Durch die Abstimmung zwischen Kraftaufwand und zurückzulegendem Arbeitsweg, lassen sich insbesondere kompaktere Antriebsmittel einsetzen, die trotz eines verkürzten Arbeitsweges und dem daraus resultierenden ungünstigen Hebel, mit dem das jeweilige Antriebsmittel am ersten Teilabschnitt angreift, eine ausreichende Kraft für eine Bewegung des Abführorgans erzeugen können. Das vorhandene Gestänge wird gleichzeitig als Auflagerpunkt für den ersten Teilabschnitt des Abführorgans eingesetzt, so daß in einer Transportstellung des Abführorgans der erste Teilabschnitt an einer uneingeschränkten Bewegung gehindert wird und somit eine vorteilhafte Arretierung vorgenommen werden kann.

Um eine Bewegung der jeweils schwenkbar angelenkten Teilabschnitte des Abführorgans ausführen zu können, ist jedes Antriebsmittel ein Arbeitszylinder. Der Arbeitszylinder welcher insbesondere ein doppelt wirkender Zylinder ist, regelt die Bewegungsrichtung des Kolbens über die vorherrschenden Druckverhältnisse auf beiden Seiten des Kolbens innerhalb des geschlossenen Zylinders. Der Einsatz eines Arbeitszylinders als Antriebsmittel hat den Vorteil, daß der Arbeitszylinder, abhängig vom Druck in seinen angeschlossenen Druckleitungen, hohe Kräfte zum Bewegen der Teilabschnitte des Abführorgans der erfindungsgemäßen Vorrichtung aufbringen kann. Als Arbeitszylinder können sowohl Hydraulikzylinder als auch Pneumatikzylinder eingesetzt werden. Jedoch hat der Einsatz eines Hydrauliksystems den Vorteil, daß die Hydraulikzylinder an das vorhandene fahrzeugseitige Hydrauliksystem angeschlossen und über eine geeignete Steuerelektronik, welche fahrzeugseitig vorhanden ist, angesteuert werden können.

Ein Ausführungsbeispiel der Erfindung, aus dem sich weitere erfinderische Merkmale ergeben, ist in der Zeichnung dargestellt. Es zeigen:

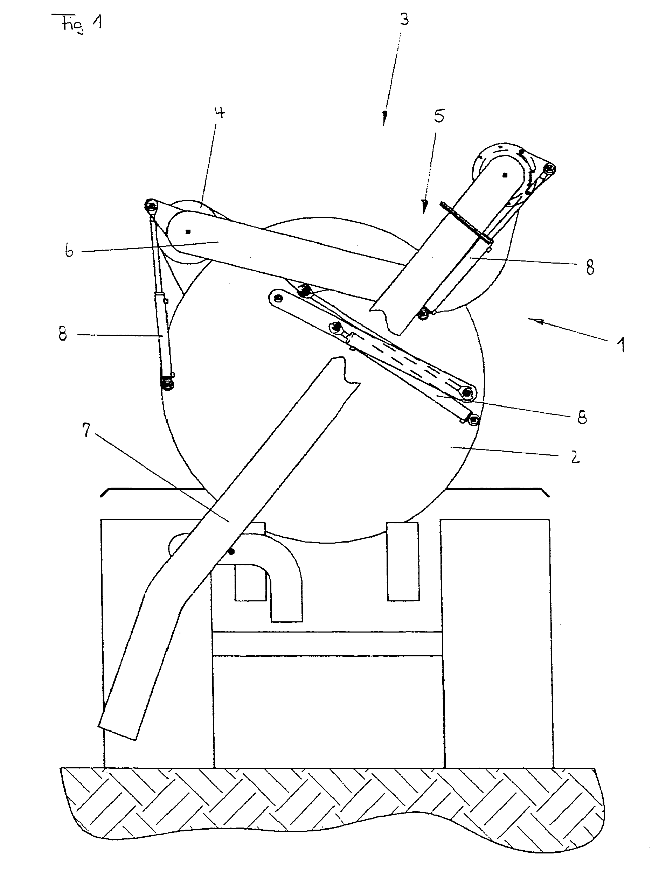

- Fig.1:: eine Ansicht einer an einem Güllewagen montierten erfindungsgemäßen Vorrichtung in einer Transportstellung;
- Fig. 2:: eine Ansicht der erfindungsgemäßen Vorrichtung in einer ersten Arbeitsstellung;
- Fig. 3:: eine Ansicht der erfindungsgemäßen Vorrichtung in einer zweiten Arbeitsstellung; und
- Fig. 4:: eine Ansicht der erfindungsgemäßen Vorrichtung mit einem verkürzten zweiten Teilabschnitt eines Abführorgans.

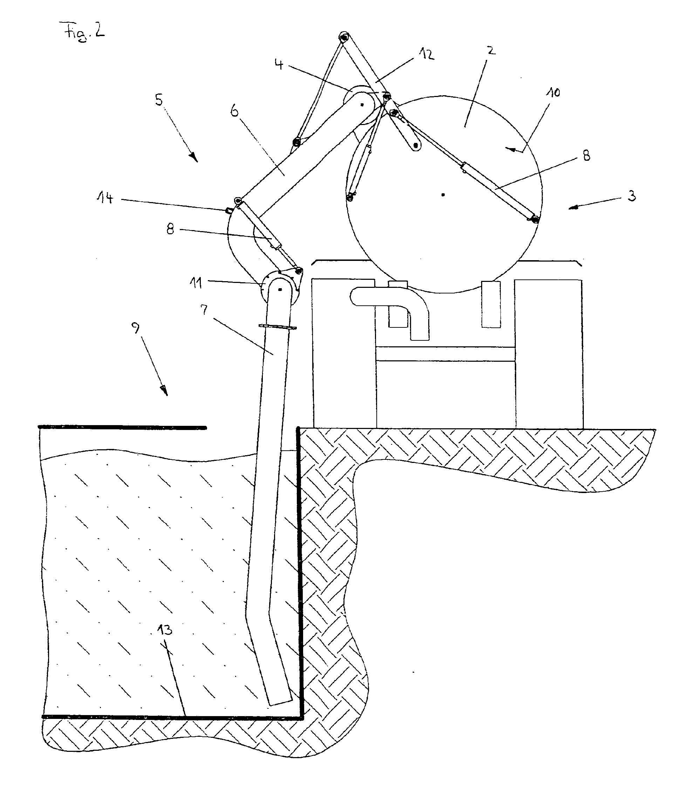

Mit 1 ist eine Vorrichtung zum Absaugen und Abführen bzw. zum Zuführen vorzugsweise flüssiger Medien bezeichnet, die beispielsweise an einem Tank 2 eines Güllewagens 3 montiert werden kann. Dazu weist der Tank 2 an seinem Umfang ein Anschlußstück 4 auf, an dem ein Abführorgan 5 der erfindungsgemäßen Vorrichtung 1 medienleitend angelenkt ist. Das Abführorgan 5 besteht insbesondere aus einem ersten Teilabschnitt 6 und einem zweiten Teilabschnitt 7, wobei an jedem Teilabschnitt 6, 7 wenigstens ein Antriebsmittel 8 angreift. Mit Hilfe der Antriebsmittel 8, wobei bevorzugt Hydraulikzylinder eingesetzt werden, läßt sich das Abführorgan 5 mit einem Behälter 9 (Fig. 2), insbesondere einen Güllesammelbehälter, in eine ein Medium leitende Verbindung bringen.

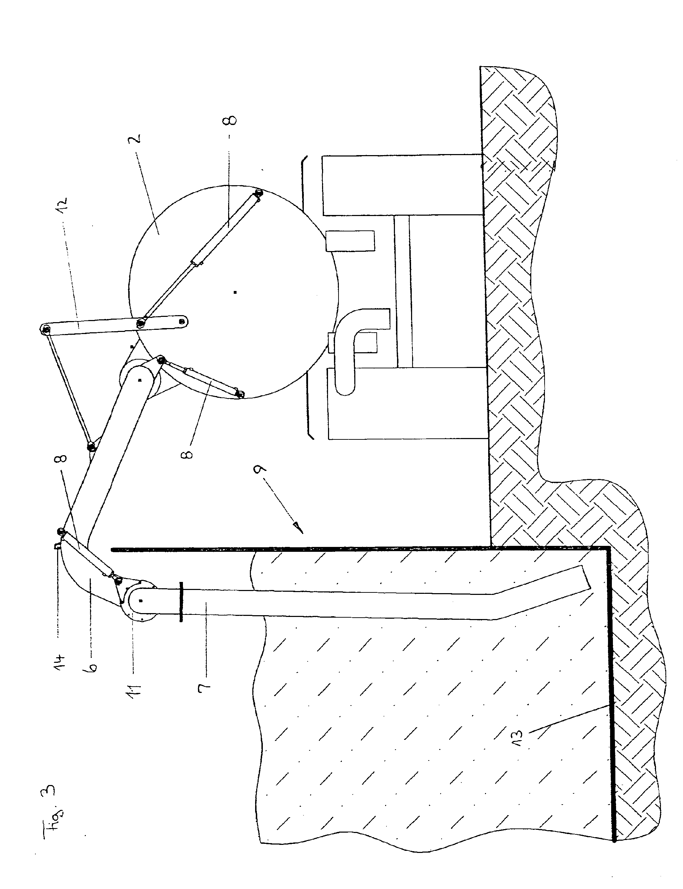

Um das Abführorgan 5 in einen jeweiligen Behälter 9 einbringen zu können, wie aus Fig. 2 und Fig. 3 ersichtlich, werden die Teilabschnitte 6, 7 des Abführorgans entlang einer Stirnseite 10 des Tanks 2 verschwenkt, wobei auch die Teilabschnitte 6, 7 über eine die Teilabschnitte 6, 7 verbindenden Drehführung 11 relativ zueinander verschwenkt werden können. Dabei kann der erste Teilabschnitt 6 um das Anschlußstück 4 mittels der Antriebsmittel 8, wobei eines der Antriebsmittel 8 über ein Gestänge 12 mit dem ersten Teilabschnitt 6 verbunden ist, bis zu einem Winkel von etwa 240° aus der Transportstellung verschwenkt werden. Das Gestänge dient insbesondere in der Transportstellung als Auflagerpunkt für den ersten Teilabschnitt des Abführorgans, so daß dieser arretiert wird. Der zweite Teilabschnitt 7, wie in der Fig. 2 und Fig. 3 dargestellt, reicht dann jeweils bis auf den Boden 13 eines jeweiligen Behälters. Nach dem der Tank 2 des Güllewagens 3 gefüllt bzw. der Behälter 9 entleert ist, wird die Zufuhr des flüssigen Mediums gestoppt und ein am ersten Teilabschnitt 6 des Abführorgans 5 angeordnetes Belüftungsorgan 14 betätigt, so daß das restliche in den Teilabschnitten 6, 7 des Abführorgans 5 befindliche flüssige Medium zurück in den jeweiligen Behälter 9 ablaufen kann. Somit werden insbesondere beim Herausschwenken des Abführorgans 5 großflächige Verschmutzungen im Bereich um einen jeweiligen Behälter 9 vermieden.

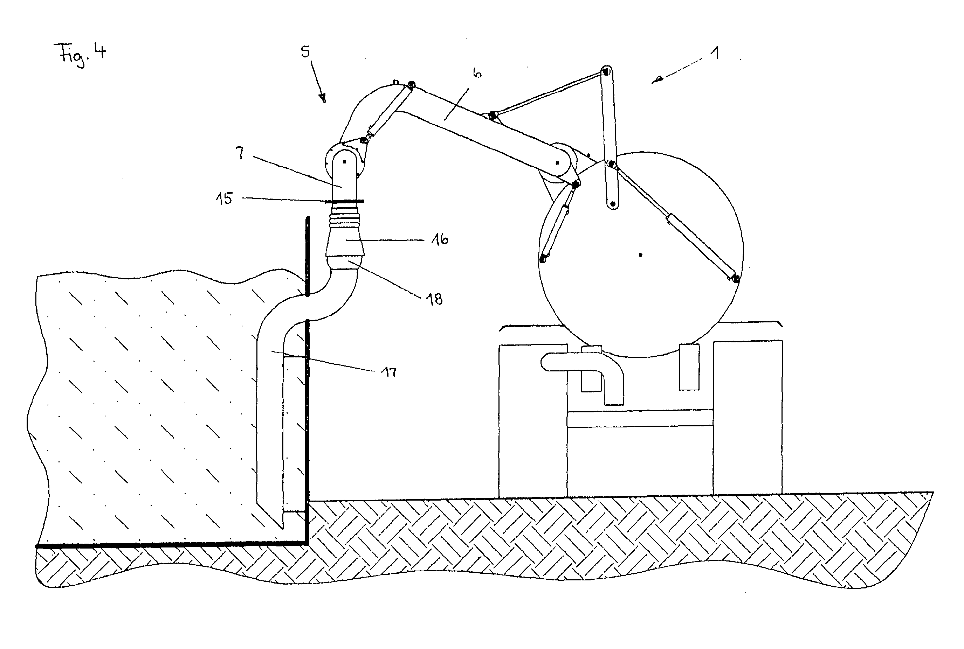

In Fig. 4 ist insbesondere eine verkürzte Ausführung des zweiten Teilabschnitts 7 der erfindungsgemäßen Vorrichtung 1 dargestellt. aufweist. Dabei ist im oberen Drittel des zweiten Teilabschnitts 7 des Abführorgans 5 ein Kupplungsorgan 15, wie z.B. ein Schnellverschluß, angeordnet, wodurch der mehrteilig ausgebildete zweite Teilabschnitt 7 in Höhe des Schnellverschlusses getrennt werden kann, wodurch das lange Ende des zweiten Teilabschnitts 7 durch einen kurzen trichterförmigen Aufsatz 16 ersetzbar ist. Mit Hilfe des Aufsatzes 16 kann insbesondere an Behältern 9, die ein vormontiertes Steigrohr 17 aufweisen das verkürzte Teilabschnitt 7 eingesetzt werden. Um eine medienleitende Verbindung zwischen dem Abführorgan 5 und dem Steigrohr 17 herzustellen, ist lediglich der trichterförmige Aufsatz 16 auf einen Absaugstutzen 18 des Steigrohres 17 aufzuschieben, wobei mit geeigneten Dichtelementen eine leckagefreie Verbindung sichergestellt werden kann.

## Patentansprüche

1. Vorrichtung zum Abführen bzw. zum Zuführen vorzugsweise flüssiger Medien, insbesondere Gülle, aus wenigstens einem bzw. in wenigstens einem Behälter, umfassend zumindestens einen Tank und umfassend wenigstens ein an den Tank angesetztes Abführorgan,
**dadurch gekennzeichnet,**
**daß** das Abführorgan (5) wenigstens zwei Teilabschnitte (6, 7) aufweist, die in parallel zueinander ausgerichteten, etwa senkrecht verlaufenden Ebenen angeordnet sind und daß jedem Teilabschnitt (6, 7) wenigstens ein Antriebsmittel (8) zugeordnet ist.

2. Vorrichtung nach Anspruch 1, **dadurch gekennzeichnet, daß** die Teilabschnitte des Abführorgans (5) einer der Stirnseiten (10) des Tanks (2) zugeordnet sind, und daß ein erster Teilabschnitt (6) und ein zweiter Teilabschnitt (7) der Teilabschnitte (6,7) in ihrer Transportstellung vorbestimmte Baulängen aufweisen, welche an die Fahrzeugabmessungen des Güllewagens (3) maximal angepaßt sind.

3. Vorrichtung nach einem der Ansprüche 1 und 2, **dadurch gekennzeichnet, daß** die Teilabschnitte (6, 7) über eine Drehführung (11) schwenkbeweglich miteinander verbunden sind.

4. Vorrichtung nach einem der Ansprüche 2 und 3, **dadurch gekennzeichnet, daß** ein erster Teilabschnitt (6) des Abführorgans (5) ein am Tank (2) angelenktes, gekröpftes Rohrstück ist.

5. Vorrichtung nach einem der Ansprüche 1 bis 4, **dadurch gekennzeichnet, daß** der erste Teilabschnitt (6) ein Belüftungsorgan (14) aufweist.

6. Vorrichtung nach Anspruch 5, **dadurch gekennzeichnet, daß** das Belüftungsorgan (14) ein elektrisch angesteuertes Ventil ist.

7. Vorrichtung nach einem der Ansprüche 4 und 5, **dadurch gekennzeichnet, daß** am Belüftungsorgan (14) ein Druckbehälter medienleitend angeschlossen ist.

8. Vorrichtung nach einem der Ansprüche 2 bis 7, **dadurch gekennzeichnet, daß** der zweite Teilabschnitt (7) ein gestrecktes Rohrstück ist, das sich etwa über eine senkrecht zur Fahrzeuglängsachse ausgerichtete Fahrzeugdiagonale erstreckt.

9. Vorrichtung nach einem der Ansprüche 2 bis 8, **dadurch gekennzeichnet, daß** der zweite Teilabschnitt (7) des Abführorgans (5) mehrteilig ausgebildet ist.

10. Vorrichtung nach einem der Ansprüche 2 bis 9, **dadurch gekennzeichnet, daß** der zweite Teilabschnitt (7) in einem vorbestimmten Bereich ein Kupplungsorgan (15) aufweist.

11. Vorrichtung nach einem der Ansprüche 2 bis 10, **dadurch gekennzeichnet, daß** im Querschnitt am freien Ende des zweiten Teilabschnittes (7) zumindest eine Befüllhilfe angeordnet ist.

12. Vorrichtung nach Anspruch 11, **dadurch gekennzeichnet, daß** jede Befüllhilfe eine Pumpe ist.

13. Vorrichtung nach einem der Ansprüche 1 bis 12, **dadurch gekennzeichnet, daß** wenigstens eines der Antriebsmittel (8) über ein Gestänge (12) am ersten Teilabschnitt (6) angelenkt ist.

14. Vorrichtung nach einem der Ansprüche 1 bis 13, **dadurch gekennzeichnet, daß** jedes Antriebsmittel (8) ein Arbeitszylinder ist.
